# EUROPEAN PATENT APPLICATION

(11) **EP 4 535 550 A1**
(43) Date of publication of application: **09.04.2025**
(21) Application number: 23810729.6
(22) Date of filing: 23.04.2023
(51) Int. Cl.: H01M 50/55, H01M 50/507

(54) **ELECTROCHEMICAL APPARATUS AND ELECTRIC DEVICE**

(30) Priority: 25.05.2022 CN 202210580553
(71) Applicant: Dongguan NVT Technology Limited, Donguan, Guangdong 523000 (CN)
(72) Inventor: CHEN, Yuansheng, Dongguan, Guangdong 523000 (CN); CHEN, Xinhuan, Dongguan, Guangdong 523000 (CN); GAN, Ming, Dongguan, Guangdong 523000 (CN); HUANG, Ting, Dongguan, Guangdong 523000 (CN)
(74) Representative: Klunker IP Patentanwälte PartG mbB
(86) International application number: PCT/CN2023/089991
(87) International publication number: WO 2023/226656

(57) **Abstract**

This application discloses an electrochemical device and an electrical device. The electrochemical device includes a housing, an electrode assembly, and a circuit board. The electrode assembly includes a first sub-electrode assembly and a second sub-electrode assembly. The first sub-electrode assembly and the second sub-electrode assembly are mounted in the housing along a first direction. A first tab and a second tab of opposite polarities are disposed on the first sub-electrode assembly. A third tab and a fourth tab of opposite polarities are disposed on the second sub-electrode assembly. The first tab and the fourth tab are of opposite polarities. A plurality of conductive pieces are disposed on the circuit board. The first tab and the fourth tab each are connected to one separate conductive piece. The second tab is connected to the third tab. The second tab is further connected to one of the conductive pieces. Viewed along the first direction, a projection of the second tab at least partially overlaps a projection of the third tab. The first sub-electrode assembly and the second sub-electrode assembly in this application are connected in series by the second tab and the third tab, and can increase the charging power, discharging power, and energy density.

## Description

### TECHNICAL FIELD

This application relates to the technical field of energy storage, and in particular, to an electrochemical device and an electrical device.

### BACKGROUND

With the development of electronic technology, electrical devices are imposing higher requirements on the charging power and discharging power of a battery and higher requirements on the cruising range of the battery, and require a higher energy density of the battery of the same size. Currently, many electrical devices are powered by a battery pack. By connecting a plurality of batteries in series or parallel in the battery pack, the electrical devices can achieve the desired high voltage and high capacity.

However, after a plurality of batteries are connected in series or parallel, a bracket for fixing each battery needs to be disposed, and a shell for packaging a plurality of batteries also needs to be disposed. Such components involved in the battery packaging take up a large amount of space, and lead to a decrease in the energy density of the batteries.

### SUMMARY

In view of the above situation, it is necessary to provide an electrochemical device and an electrical device that can improve the charging power, discharging power, and energy density.

Some embodiments of this application provide an electrochemical device. The electrochemical device includes a housing, an electrode assembly, and a circuit board. The electrode assembly includes a first sub-electrode assembly and a second sub-electrode assembly. The first sub-electrode assembly and the second sub-electrode assembly are mounted in the housing along a first direction. A first tab and a second tab of opposite polarities are disposed on the first sub-electrode assembly. A third tab and a fourth tab of opposite polarities are disposed on the second sub-electrode assembly. The first tab and the fourth tab are of opposite polarities. A plurality of conductive pieces are disposed on the circuit board. The first tab and the fourth tab each are connected to one separate conductive piece. The second tab is connected to the third tab. The second tab is further connected to one of the conductive pieces. Viewed along the first direction, a projection of the second tab at least partially overlaps a projection of the third tab.

The first sub-electrode assembly and second sub-electrode assembly are connected in series by the second tab and the third tab. In this way, when the circuit board is engaged in charging or discharging, the charging or discharging current does not flow back to the circuit board after passing through each of the first sub-electrode assembly or the second sub-electrode assembly separately, but flows back to the circuit board after passing through both the first sub-electrode assembly and the second sub-electrode assembly, thereby reducing the internal resistance of the electrochemical device and increasing the charging power and discharging power. The projection of the second tab at least partially overlaps the projection of the third tab in the first direction, thereby reducing the space occupied by the second tab and the third tab, and improving the energy density of the electrochemical device.

In some embodiments, the conductive pieces and the second tab are made of a first material. The third tab is made of a second material. A melting point of the first material is higher than a melting point of the second material. Along the first direction, the conductive pieces, the second tab, and the third tab are stacked in sequence. By virtue of such an arrangement, in welding the second tab, the third tab, and the conductive pieces, the risk of burning through the third tab is reduced, and the third tab is protected effectively.

In some embodiments, a first connecting region exists between the second tab and the conductive pieces. A second connecting region exists between the second tab and the third tab. Viewed along the first direction, a projection of the first connecting region does not overlap a projection of the second connecting region.

The above arrangement staggers the first connecting region from the second connecting region, thereby reducing the difficulty of multi-layer welding and improving the welding efficiency.

In some embodiments, viewed along the first direction, a projection of the first tab, a projection of the fourth tab, and the projection of the second tab do not overlap.

The above arrangement makes it convenient to connect the first tab, the second tab, and the fourth tab to the conductive pieces of the circuit board, optimizes the welding operation space, facilitates the welding operation, and improves the welding efficiency.

In some embodiments, viewed along the first direction, the projection of the second tab is located between the projection of the first tab and the projection of the fourth tab.

In an actual welding process, the welding region between the second tab and the circuit board is relatively small, and the welding region between the first tab and the circuit board as well as the welding region between the fourth tab and the circuit board are relatively large. The relatively large welding regions are arranged on the two sides, thereby optimizing the welding space, facilitating the welding process, and facilitating routing on the circuit board.

In some embodiments, the second tab includes a first portion and a second portion. The first portion is connected to the first sub-electrode assembly. The second portion is configured to be connected to the conductive pieces. Viewed along the first direction, a width of the second portion is less than a width of the first portion.

The charging current and the discharging current flow through the first portion, and a detection current flows through the second portion. The detection current is less than the charging current and the discharging current, thereby reducing the width of the second portion. The reduced width of the second portion can downsize the corresponding conductive piece and improve the utilization rate of the circuit board.

In some embodiments, a plurality of accommodation cavities isolated from each other are disposed in the housing. The plurality of accommodation cavities are arranged along the first direction. The first sub-electrode assembly and the second sub-electrode assembly are mounted in different accommodation cavities. This can eliminate the need for a fixing housing for fixing the first sub-electrode assembly and the second sub-electrode assembly and a separate packaging housing, thereby downsizing the battery and increasing the energy density of the battery.

In some embodiments, the housing includes a body portion, two first seal edges, and two second seal edges. A second direction, a third direction, and the first direction are perpendicular to each other. Along the second direction, the two first seal edges are located on two opposite sides of the body portion respectively. Along the third direction, the two second seal edges are located on the two opposite sides of the body portion respectively.

In some embodiments, a length of each of the first seal edges along the third direction is W, a length of each of the second seal edges along the second direction is L, and W is less than L. The circuit board is disposed on the first seal edge.

The length of the circuit board in the third direction corresponds to the length of the first seal edge in the third direction, thereby shortening the size of the circuit board accordingly and increasing the energy density of the electrochemical device.

In some embodiments, one of the first seal edges includes a first section and a second section. Viewed along the first direction, a projection of the first section is spaced apart from a projection of the second section. The circuit board is disposed in the first section, thereby further downsizing the circuit board.

In some embodiments, the two second seal edges extend along the first direction. The electrochemical device further includes a first adhesive. The first adhesive is disposed on each second seal edge. The first adhesive overlays an end face of the second seal edge in an extension direction, thereby serving to insulate the cut end face of the first adhesive.

In some embodiments, the second seal edges extend along the first direction. The electrochemical device further includes a second adhesive. The second seal edges are bonded to the body portion by the second adhesive.

The second seal edges are folded to extend along the first direction, thereby reducing the space occupied by the housing. The second adhesive may be an ultraviolet adhesive or hot-melt adhesive serving to fix the seal edge.

In some embodiments, one of the second seal edges includes a third section, a fourth section, and a fifth section that are connected together. Viewed along the first direction, the third section is perpendicular to the fourth section, and the third section is parallel to the fifth section. The circuit board is disposed in any one of the third section, the fourth section, or the fifth section.

The length of the third section and the length of the fifth section in the second seal edge in the third direction are both less than the length of the second seal edge in the second direction. The length of the fourth section in the second direction is less than the length of the second seal edge in the second direction. Positioning the circuit board in any one of the third section, the fourth section, or the fifth section can downsize the circuit board.

In some embodiments, the circuit board is mounted on the first seal edges. Viewed along the first direction, a projection of the circuit board at least partially overlaps a projection of the first seal edges, thereby shortening the overall length of the electrochemical device in the second direction.

In some embodiments, the electrochemical device further includes a temperature-controlled switch. The temperature-controlled switch is mounted on the circuit board, and is connected to a plurality of electrode assembles in series. The temperature-controlled switch includes a temperature sensing wall. The temperature sensing wall is oriented toward one of the first seal edges. Upon detecting that the heat of an electrode assembly exceeds a preset threshold, the temperature-controlled switch controls the current between the circuit board and the electrode assembly to get cut off to reduce the risk of damage to the electrochemical device caused by overcharge.

In some embodiments, a thermal conductor is further disposed between the temperature sensing wall and the first seal edges.

The thermal conductor can play a role in heat transfer, and can reduce the loss of heat and improve the accuracy of temperature detection.

An embodiment of this application further provides an electrical device. The electrical device includes the electrochemical device according to any one of the foregoing embodiments.

The first tab, the second tab, and the fourth tab in this application are connected to the circuit board by the conductive piece. The first sub-electrode assembly and second sub-electrode assembly are connected in series through the connection between the second tab and the third tab. In this way, during charging and discharging of the electrochemical device, the current passes through the circuit board, the first tab, the first sub-electrode assembly, the second sub-electrode assembly, and the fourth tab in sequence. Therefore, the charging current and the discharging current are prevented from flowing back to the circuit board after passing through each of the sub-electrode assemblies separately, thereby reducing the internal resistance of the electrochemical device and increasing the charging power and discharging power. The projection of the second tab in the first direction at least partially overlaps the projection of the third tab in the first direction, thereby reducing the space occupied by the second tab and the third tab, and improving the energy density of the electrochemical device.

### BRIEF DESCRIPTION OF DRAWINGS

FIG. 1 is a schematic structural diagram of an electrochemical device according to an embodiment of this application;
FIG. 2 is a schematic exploded view of an electrochemical device according to an embodiment of this application;
FIG. 3 is a cross-sectional view of the electrochemical device shown in FIG. 2;
FIG. 4 is a schematic structural diagram of an electrochemical device according to an embodiment of this application;
FIG. 5 is a partial cross-sectional view of an electrochemical device according to an embodiment of this application;
FIG. 6 is a side view of an electrochemical device according to an embodiment of this application;
FIG. 7 is a schematic diagram of connection between a circuit board and a third tab according to an embodiment of this application;
FIG. 8 is a schematic diagram of connection between an electrode assembly and a circuit board according to an embodiment of this application;
FIG. 9 is a schematic structural diagram of a tab according to an embodiment of this application;
FIG. 10 is a schematic structural diagram of a tab according to another embodiment of this application;
FIG. 11 is a side view of connection between a third tab and a conductive piece according to an embodiment of this application;
FIG. 12 is a top view of an electrochemical device according to an embodiment of this application;
FIG. 13 is a top view of an electrochemical device according to another embodiment of this application;
FIG. 14 is a top view of an electrochemical device according to still another embodiment of this application;
FIG. 15 is a side view of an electrochemical device according to an embodiment of this application;
FIG. 16 is a schematic diagram of a folded circuit board of an electrochemical device according to an embodiment of this application;
FIG. 17 is a schematic diagram of a folded circuit board of an electrochemical device according to another embodiment of this application;
FIG. 18 is a partial cross-sectional view of an electrochemical device according to an embodiment of this application; and
FIG. 19 is a schematic diagram of an electrical device according to an embodiment of this application.

### List of reference numerals:

electrochemical device 100
housing 10
first housing part 11
second housing part 12
partition piece 13
body portion 14
first seal edge 15
first section 151
second section 152
second seal edge 16
third section 161
fourth section 162
fifth section 163
accommodation cavity 101
electrode assembly 20
first tab 21
second tab 22
first portion 221
second portion 222
third tab 23
fourth tab 24
fifth tab 25
sixth tab 26
first sub-electrode assembly 201
second sub-electrode assembly 202
third sub-electrode assembly 203
series connection path 204
circuit board 30
conductive piece 31
first connecting pad 32
second connecting pad 33
clearance opening 34
first connecting region 401
second connecting region 402
first adhesive 50
second adhesive 60
temperature-controlled switch 70
temperature sensing wall 71
thermal conductor 72
electrical device 1
first direction Z
second direction Y
third direction X

### DETAILED DESCRIPTION OF EMBODIMENTS

The following describes the technical solutions in some embodiments of this application with reference to the drawings hereof. Evidently, the described embodiments are merely a part of but not all of the embodiments of this application.

The term "perpendicular" is a description of an ideal state between two components. In the actual production or use state, one component may be approximately perpendicular to another component. For example, numerically, the term "perpendicular" may represent an angle of 90°±10° between two straight lines, or a dihedral angle of 90°±10° between two planes, or an angle of 90°±10° between a straight line and a plane. Two components described as "perpendicular" to each other may be not absolute straight lines or planes, but may be roughly straight lines or planes. An object is considered to be a "straight line" or "plane" if the overall extension direction of the object is a straight line or plane as viewed from a macro perspective.

The term "parallel" is a description of an ideal state between two components. In an actual production or use state, one component may be approximately parallel to another component. For example, numerically, the term "parallel" may represent an angle of 180°±10° between two straight lines, or a dihedral angle of 180°±10° between two planes, or an angle of 180°±10° between a straight line and a plane. The two components described as "parallel" may be not absolute straight lines or planes, but may be roughly straight lines or planes. An object is considered to be a "straight line" or "plane" if the overall extension direction of the object is a straight line or plane as viewed from a macro perspective.

Unless otherwise defined, when used for describing the number of components, the term "plurality" herein specifically means that there are two or more components.

Unless otherwise defined, all technical and scientific terms used herein bear the same meanings as what is normally understood by a person skilled in the technical field of this application. The terms used in the specification of this application are merely intended to describe specific embodiments but not to limit this application.

This application discloses an electrochemical device. The electrochemical device includes a housing, an electrode assembly, and a circuit board. The electrode assembly includes a first sub-electrode assembly and a second sub-electrode assembly. The first sub-electrode assembly and the second sub-electrode assembly are mounted in the housing along a first direction. A first tab and a second tab of opposite polarities are disposed on the first sub-electrode assembly. A third tab and a fourth tab of opposite polarities are disposed on the second sub-electrode assembly. The first tab and the fourth tab are of opposite polarities. A plurality of conductive pieces are disposed on the circuit board. The first tab and the fourth tab each are connected to one separate conductive piece. The second tab is connected to the third tab. The second tab is further connected to one of the conductive pieces. Viewed along the first direction, a projection of the second tab at least partially overlaps a projection of the third tab.

The first tab, the second tab, and the fourth tab of the electrode assembly are connected to the circuit board by the conductive piece. The first sub-electrode assembly and second sub-electrode assembly are connected in series through the connection between the second tab and the third tab. In this way, during charging and discharging of the electrochemical device, the current passes through the circuit board, the first tab, the first sub-electrode assembly, the second tab, the third tab, the second sub-electrode assembly, and the fourth tab in sequence, so that the charging current and the discharging current do not flow back to the circuit board after passing through each of the sub-electrode assemblies separately, but flow back to the circuit board after passing through all the sub-electrode assemblies, thereby reducing the internal resistance of the electrochemical device and increasing the charging power and discharging power. The projection of the second tab in the first direction at least partially overlaps the projection of the third tab in the first direction, thereby reducing the space occupied by the second tab and the third tab, and improving the energy density of the electrochemical device.

The following describes some embodiments of this application with reference to drawings. To the extent that no conflict occurs, the following embodiments and the features in the embodiments may be combined with each other.

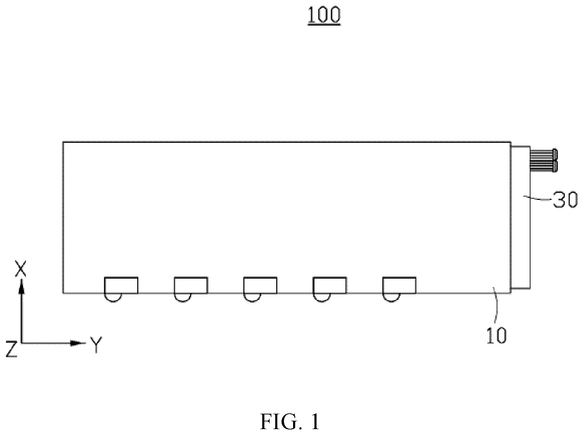

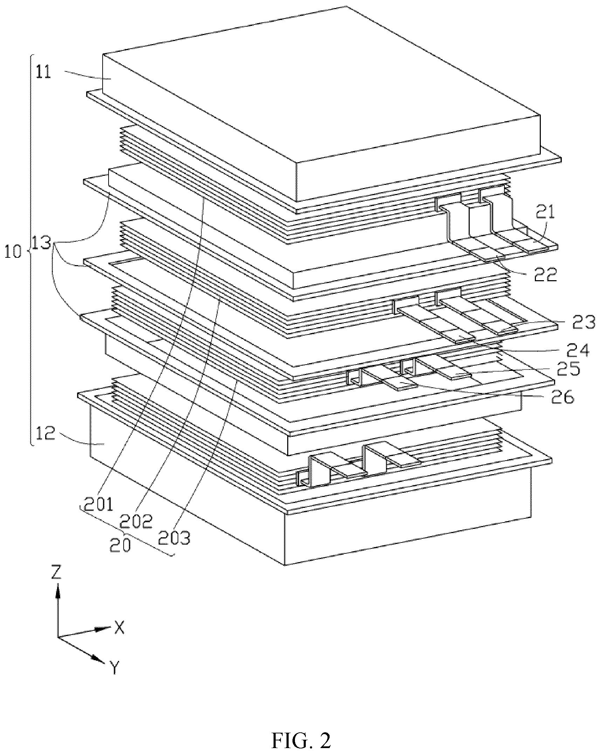

Referring to FIG. 1 and FIG. 2, an embodiment of this application provides an electrochemical device 100. The electrochemical device 100 includes a housing 10, an electrode assembly 20, and a circuit board 30. Referring to FIG. 2 to FIG. 4, the electrode assembly 20 includes a first sub-electrode assembly 201 and a second sub-electrode assembly 202. The first sub-electrode assembly 201 and the second sub-electrode assembly 202 are mounted in the housing 10 along a first direction Z. A first tab 21 and a second tab 22 of opposite polarities are disposed on the first sub-electrode assembly 201. The second sub-electrode assembly 202 includes a third tab 23 and a fourth tab 24 of opposite polarities. A plurality of conductive pieces 31 are disposed on the circuit board 30. The first tab 21 and the fourth tab 24 each are connected to one separate conductive piece 31. The second tab 22 is connected to the third tab 23. The second tab 22 is further connected to one of the conductive pieces 31.

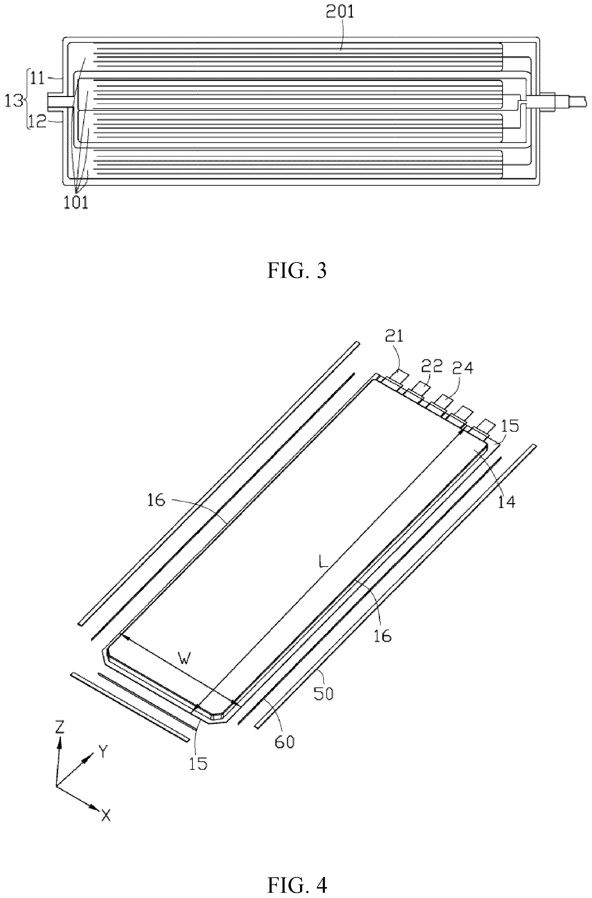

In some embodiments, referring to FIG. 2 and FIG. 3, a plurality of accommodation cavities 101 isolated from each other are disposed in the housing 10. The first sub-electrode assembly 201 and the second sub-electrode assembly 202 are mounted in different accommodation cavities 101. In some embodiments, the housing 10 includes a first housing part 11, a second housing part 12, and a plurality of partition pieces 13. The first housing part 11 is connected to the second housing part 12. The plurality of partition pieces 13 are disposed between the first housing part 11 and the second housing part 12. The first housing part 11, the second housing part 12, and the plurality of partition pieces 13 close in together to form a plurality of accommodation cavities 101. The plurality of accommodation cavities 101 are isolated from each other. Each of the accommodation cavities 101 is filled with an electrolyte solution. The electrolyte solution does not circulate between the plurality of accommodation cavities 101. The plurality of accommodation cavities 101 are arranged along a first direction Z. The first direction Z is parallel to a thickness direction of the housing 10. In an embodiment, the first housing part 11 and the second housing part 12 are disposed opposite to each other along the first direction Z.

In some embodiments, referring to FIG. 3 and FIG. 4, the partition pieces 13 are disposed in a space formed by enclosure by the first housing part 11 and the second housing part 12 so that the partition pieces 13 are not visible from the outside. A seal edge is formed at a junction between the first housing part 11 and the second housing part 12 so that the housing 10 includes a body portion 14, two first seal edges 15, and two second seal edges 16. Along the second direction Y, the two first seal edges 15 are located on the two opposite sides of the body portion 14, and the second direction Y is perpendicular to the first direction Z. Along the third direction X, the two second seal edges 16 are located on the two opposite sides of the body portion 14, and the third direction X is perpendicular to the first direction Z. The third direction X is further perpendicular to the second direction Y. The first tab 21, the second tab 22, and the third tab 23 of the electrode assembly 20 may extend from the first seal edge 15 or the second seal edge 16 out of the accommodation cavity 101. The first seal edge 15 or the second seal edge 16 may serve to seal the accommodation cavity 101.

In some embodiments, referring to FIG. 4, a length of the first seal edge 15 along the third direction X is W, a length of the second seal edge 16 along the second direction Y is L, and W is less than L. The second direction Y is parallel to the length direction of the housing 10. The third direction X is parallel to the width direction of the housing 10.

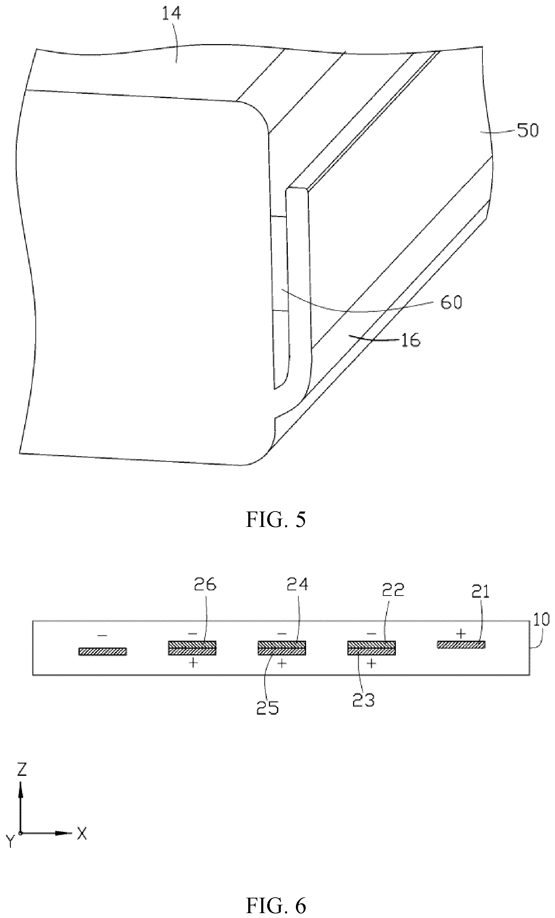

In some embodiments, referring to FIG. 4 and FIG. 5, the electrochemical device 100 further includes a first adhesive 50. The first seal edge 15 and the second seal edge 16 extend from the body portion 14, and both include a cut end face in the extension direction. A first adhesive 50 is disposed on the first seal edge 15 or the second seal edge 16. The first adhesive 50 overlays the end face of the first seal edge 15 or the second seal edge 16 in the extension direction, and serves to insulate the cut end face of the first seal edge 15 or the second seal edge 16.

In some embodiments, referring to FIG. 4 and FIG. 5, the first adhesive 50 is a piece of U-shaped adhesive tape, for example, single-sided tape or double-sided tape. The adhesive tape occupies less space, and helps to downsize the electrochemical device 100.

In some embodiments, referring to FIG. 4 and FIG. 5, the electrochemical device 100 further includes a second adhesive 60. The first seal edge 15 or the second seal edge 16, on which no tab is disposed, is folded and extends along the first direction Z. After being folded, the first seal edge 15 or the second seal edge 16 can reduce the space occupied by the entire electrochemical device 100, thereby improving the space utilization rate of the electrochemical device 100, and increasing the energy density of the electrochemical device 100. The folded first seal edge 15 or second seal edge 16 is bonded to the body portion 14 by the second adhesive 60. The second adhesive 60 may be an ultraviolet adhesive or hot-melt adhesive serving to fix the seal edge.

In some embodiments, the folded first seal edge 15 or second seal edge 16 is coated with the first adhesive 50. The first adhesive 50 is bonded to the body portion 14 by the second adhesive 60. In some embodiments, the first adhesive 50 may serve as a bonding medium between the seal edge and the second adhesive 60 to protect the seal edge.

Referring to FIG. 2 to FIG. 4, the first sub-electrode assembly 201 includes a negative electrode plate, a positive electrode plate, a separator, a first tab 21, and a second tab 22. The separator is located between the negative electrode plate and the positive electrode plate. The positive electrode plate and the negative electrode plate may be stacked or wound. The polarity of the first tab 21 is opposite to the polarity of the second tab 22. For example, the first tab 21 is a positive tab, and is connected to the positive electrode plate; and the second tab 22 is a negative tab, and is connected to the negative electrode plate. The second sub-electrode assembly 202 includes a negative electrode plate, a positive electrode plate, a separator, and a third tab 23 and a fourth tab 24 of opposite polarities. For detailed settings, reference may be made to the first sub-electrode assembly 201, and the details are omitted herein.

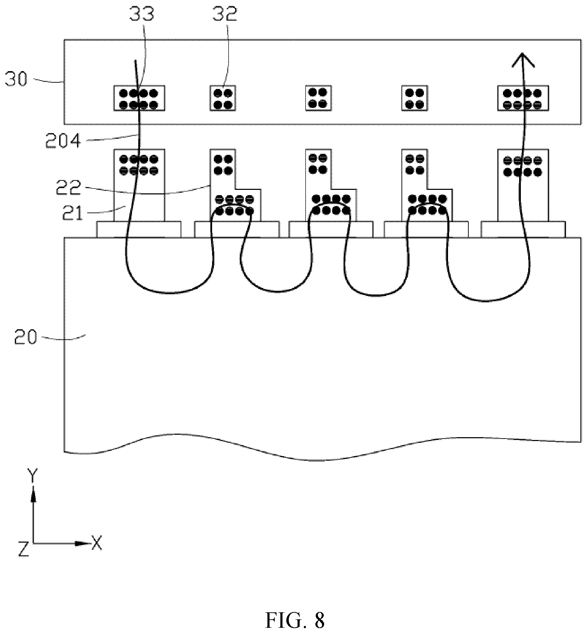

The first tab 21 is connected to one conductive piece 31. The fourth tab 24 is connected to one conductive piece 31. The fourth tab 24 is of an opposite polarity to the first tab 21. The second tab 22 is connected to the third tab 23 to implement series connection between the first sub-electrode assembly 201 and the second sub-electrode assembly 202. Referring to FIG. 8, a series connection path 204 is formed after the series connection is implemented. The series connection path 204 is a path along which the charging current and the discharging current flow. The second tab 22 is further connected to one of the conductive pieces 31. In this way, a current for detection is caused to flow between the second tab 22 and the circuit board 30. The detection current is less than the charging current and the discharging current.

Referring to FIG. 2 to FIG. 4, the first sub-electrode assembly 201 and the second sub-electrode assembly 202 are mounted in different accommodation cavities 101, so that the first sub-electrode assembly 201 and the second sub-electrode assembly 202 are arranged along the first direction Z.

In some embodiments, the electrode assembly 20 further includes a third sub-electrode assembly 203. The third sub-electrode assembly 203 includes a negative electrode plate, a positive electrode plate, a separator, and a fifth tab 25 and a sixth tab 26 of opposite polarities. For detailed settings, reference may be made to the first sub-electrode assembly 201, and the details are omitted herein.

The third sub-electrode assembly 203 is disposed on one side of the second sub-electrode assembly 202, the side being oriented away from the first sub-electrode assembly 201. The sixth tab 26 is of an opposite polarity to the third tab 23. The fifth tab 25 is connected to the fourth tab 24. The sixth tab 26 is connected to a conductive piece 31. Viewed along the first direction Z, a projection of the fifth tab 25 at least partially overlaps a projection of the fourth tab 24.

In some embodiments, the electrode assembly 20 may further include more sub-electrode assemblies, for example, a fourth sub-electrode assembly (not identified), and the like, the details of which are omitted herein.

In some embodiments, the number of sub-electrode assemblies is N. The number of tabs extending from the electrode assembly 20 is S. Two tabs connected together are deemed to be one tab. For example, one second tab 22 and one third tab 23 connected together are counted as one tab. A first tab 21 that is not connected to any other tabs is counted as one tab. The numbers satisfy: N + 1 ≤ S < 2N. Optionally, the number N of sub-electrode assemblies may be 2, 3, 4, 5, 6, 7, or the like.

As an example, the electrode assembly 20 does not include a third sub-electrode assembly 203, and the number of sub-electrode assemblies is N = 2. The number of the first tabs 21, the number of the second tabs 22, the number of the third tabs 23, and the number of the fourth tabs 24 are one separately. Therefore, the number of tabs extending from the electrode assembly 20 is S = 3.

As an example, the electrode assembly 20 includes a third sub-electrode assembly 203, and the number of sub-electrode assemblies is N = 3. The number of the first tabs 21, the number of the second tabs 22, the number of the third tabs 23, the number of the fourth tabs 24, the number of the fifth tabs 25, and the number of the sixth tabs 26 are one separately. Therefore, the number of tabs extending from the electrode assembly 20 is S = 4.

Referring to FIG. 6, viewed along the first direction Z, the projection of the second tab 22 at least partially overlaps the projection of the third tab 23. In this way, viewed along the first direction Z, the space occupied by the second tab 22 and the third tab 23 is reduced, thereby increasing the energy density of the electrochemical device 100.

In some embodiments, referring to FIG. 4 and FIG. 6, the first tab 21, the second tab 22, the third tab 23, and the fourth tab 24 all protrude from the first seal edge 15, and extend along the second direction Y. Viewed along the first direction Z, the projection of the first tab 21, the projection of the fourth tab 24, and the projection of the second tab 22 do not overlap. The above arrangement makes it convenient to connect the first tab 21, the second tab 22, and the fourth tab 24 to the conductive pieces 31 of the circuit board 30. For example, when the first tab 21, the second tab 22, and the fourth tab 24 are connected to the conductive pieces 31 by welding, the first tab 21, the second tab 22, and the fourth tab 24 are arranged in the way above to optimize the welding operation space, facilitate the welding operation, and improve the welding efficiency.

In some embodiments, referring to FIG. 4 and FIG. 6, viewed along the third direction X, the first tab 21, the second tab 22, and the fourth tab 24 at least partially overlap to reduce the space occupied by the first tab 21, the second tab 22, and the third tab 23 in the first direction Z, thereby increasing the energy density of the electrochemical device 100.

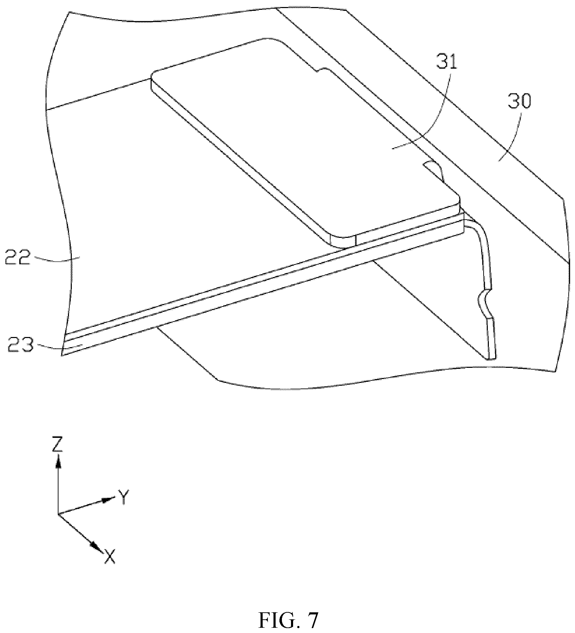

Referring to FIG. 7 and FIG. 8, a plurality of conductive pieces 31 on the circuit board 30 are arranged sequentially in such order that they correspond to the first tab 21, the second tab 22, and the fourth tab 24, respectively. The first tab 21 is connected to one conductive piece 31, so as to be electrically connected to the circuit board 30. The second tab 22 is connected to one conductive piece 31, so as to be electrically connected to the circuit board 30. The fourth tab 24 is connected to one conductive piece 31, so as to be electrically connected to the circuit board 30.

The first sub-electrode assembly 201 and the second sub-electrode assembly 202 are connected in series through the connection between the second tab 22 and the third tab 23. In this way, when the circuit board 30 is engaged in charging and discharging, the charging or discharging current passes through the circuit board 30, the first tab 21, the first sub-electrode assembly 201, the second tab 22, the third tab 23, the second sub-electrode assembly 202, and the fourth tab 24 in sequence. Therefore, the charging or discharging current does not flow back to the circuit board 30 after passing through the first sub-electrode assembly 201 alone, but flows back to the circuit board 30 after passing through both the first sub-electrode assembly 201 and the second sub-electrode assembly 202, thereby reducing the internal resistance of the electrochemical device 100 and increasing the charging power and discharging power. Electronic components configured to collect information about the first sub-electrode assembly 201 and the second sub-electrode assembly 202 are disposed on the circuit board 30. Through the second tab 22, a current for detecting information such as voltage and current flows between the first sub-electrode assembly 201 and the circuit board, and between the second sub-electrode assembly 202 and the circuit board 30. The detection current is less than the charging current and the discharging current.

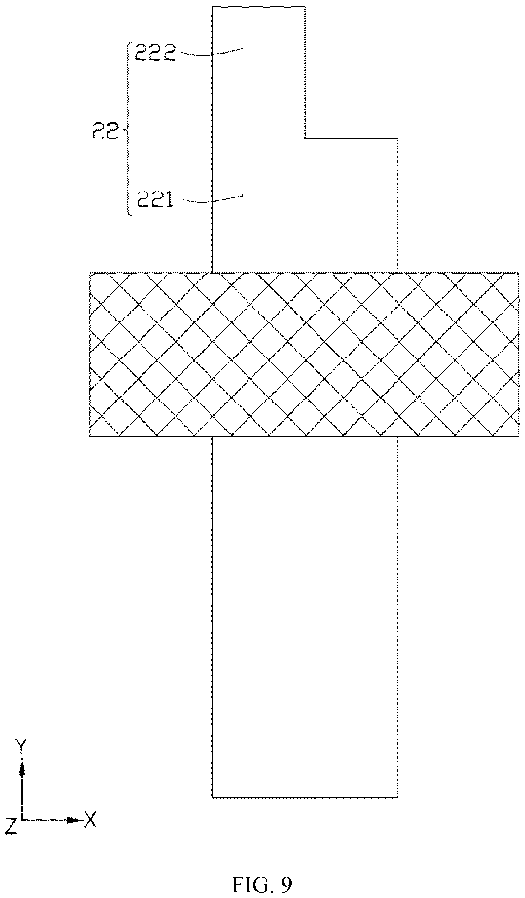

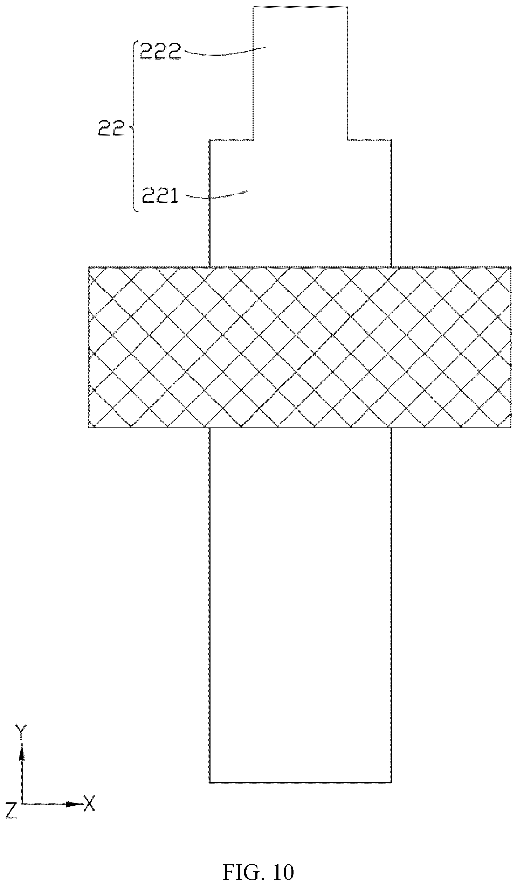

In some embodiments, referring to FIG. 8 to FIG. 10, the second tab 22 includes a first portion 221 and a second portion 222. The first portion 221 is connected to the first sub-electrode assembly 201. The second portion 222 is configured to be connected to the conductive pieces 31. Viewed along the first direction Z, a width of the second portion 222 in the third direction X is less than a width of the first portion 221 in the third direction X. The third tab 23 may be connected to the relatively wide first portion 221, so that the charging current and the discharging current flow through the first portion 221, and the detection current flows through the second portion 222. The detection current is less than the charging current and the discharging current, thereby reducing the width of the second portion 222. The reduced width of the second portion 222 can downsize the corresponding conductive piece 31 and improve the utilization rate of the circuit board 30. As an example, the conductive piece 31 is welded to the circuit board 30. The second portion 222 of the second tab 22 is welded to the conductive piece 31. The reduced width of the second portion 222 makes the size of the conductive piece 31 reducible. In this way, the area of the welding region, welded to the conductive piece 31, on the circuit board 30 is reducible, thereby increasing the utilization rate of the area of the circuit board 30.

Optionally, the second tab 22 is an L-shaped tab or an inverted hollow T-shaped tab. In this way, viewed along the first direction Z, the width of the second portion 222 in the third direction X is less than the width of the first portion 221 in the third direction X.

In some embodiments, referring to FIG. 8, viewed along the first direction Z, the width of the second portion 222 of the second tab 22 in the third direction X is less than the width of the first portion 221 in the third direction X. A first connecting pad 32 is disposed on the circuit board 30. The conductive piece 31 welded to the second tab 22 is welded to the first connecting pad 32. Further, at least two second connecting pads 33 are disposed on the circuit board 30. The conductive piece 31 welded to the first tab 21 is welded to one of the second connecting pads 33, and the conductive piece 31 welded to the fourth tab 24 is welded to one of the second connecting pads 33. The area of the first connecting pad 32 is smaller than the area of the second connecting pad 33. Viewed along the first direction Z, the projection of the second tab 22 is located between the projection of the first tab 21 and the projection of the fourth tab 24. In this way, the relatively large second connecting pads 33 on the circuit board 30 can be made to be located at both ends, and the relatively small first connecting pad 32 is located between at least two second connecting pads 33. During welding, the first connecting pad 32 located between the at least two second connecting pads 33 is relatively small in area, thereby facilitating the welding operation and improving the welding efficiency. Optionally, both the first connecting pad 32 and the second connecting pad 33 are bonding pads.

In some embodiments, referring to FIG. 7, the second tab 22 is a negative tab. The conductive piece 31 and the second tab 22 are made of a first material. For example, the first material may be nickel. The third tab 23 is a positive tab. The third tab 23 is made of a second material different from the first material. For example, the second material may be aluminum. The melting point of the first material is higher than the melting point of the second material.

Along the first direction Z, the conductive piece 31, the second tab 22, and the third tab 23 are stacked in sequence. In other words, the second tab 22 is welded to the conductive piece 31 and is disposed on one side of the conductive piece 31 in the first direction Z. The third tab 23 is welded to the second tab 22 and located on one side of the second tab 22, the side being oriented away from the conductive piece 31. The melting point of nickel is higher than the melting point of aluminum. The above arrangement can protect the aluminum tab and reduce the risk of burning through the aluminum tab.

In some embodiments, the conductive piece 31, the second tab 22, and the third tab 23 are stacked sequentially along the first direction Z. Along the first direction Z, the thickness of the conductive piece 31 made of the first material may be 0.08 mm to 0.3 mm, and specifically may be 0.08 mm, 0.1 mm, 0.25 mm, or 0.3 mm. The thickness of the second tab 22 made of the first material may be 0.08 mm to 0.3 mm, and specifically may be 0.08 mm, 0.1 mm, 0.25 mm, or 0.3 mm. The thickness of the third tab 23 made of the second material may be 0.1 mm to 0.3 mm, and specifically may be 0.1 mm, 0.25 mm, or 0.3 mm.

In some embodiments, along the first direction Z, both the thickness of the conductive piece 31 and the thickness of the second tab 22 are greater than a thickness difference between the conductive piece 31 and the second tab 22. Along the first direction Z, both the thickness of the second tab 22 and the thickness of the third tab 23 are greater than a thickness difference between the second tab 22 and the third tab 23. This setting facilitates the welding operation and improves the welding effect.

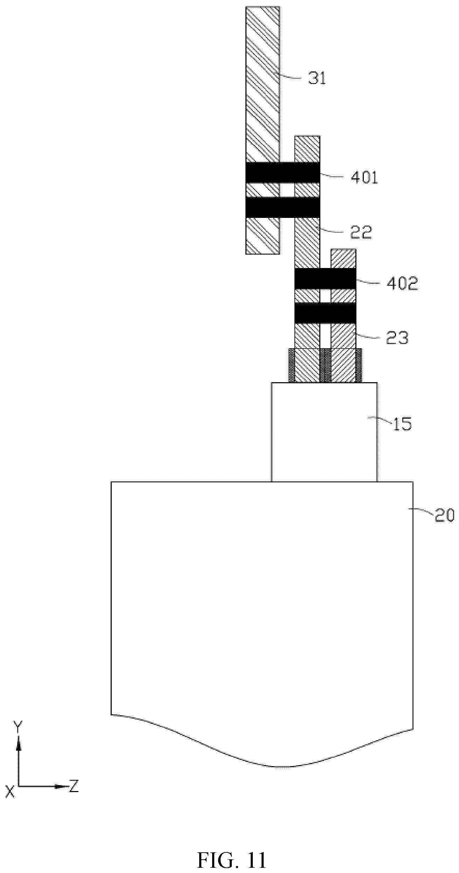

In some embodiments, referring to FIG. 11, a first connecting region 401 exists between the conductive piece 31 and the second tab 22. A second connecting region 402 exists between the third tab 23 and the second tab 22. Viewed along the first direction Z, a projection of the first connecting region 401 does not overlap a projection of the second connecting region 402. The above arrangement staggers the first connecting region 401 from the second connecting region 402, thereby reducing the difficulty of multi-layer welding and improving the welding efficiency. As an example, an extension length of the second tab 22 is greater than an extension length of the third tab 23. In the extension direction of the second tab 22, the second tab 22 is made to exceed the third tab 23. The excess part of the second tab 22 beyond the third tab 23 is welded to the conductive piece 31. The non-excess part of the second tab 22 not beyond the third tab 23 overlaps and is welded to the third tab 23.

In some embodiments, referring to FIG. 1 and FIG. 4, the first tab 21, the second tab 22, the third tab 23, and the fourth tab 24 protrude from the first seal edge 15. The circuit board 30 is disposed on the first seal edge 15. The first seal edge 15 is a short edge. The length of the circuit board 30 in the third direction X corresponds to the length of the first seal edge 15 in the third direction X, thereby shortening the size of the circuit board 30 accordingly and increasing the energy density of the electrochemical device 100.

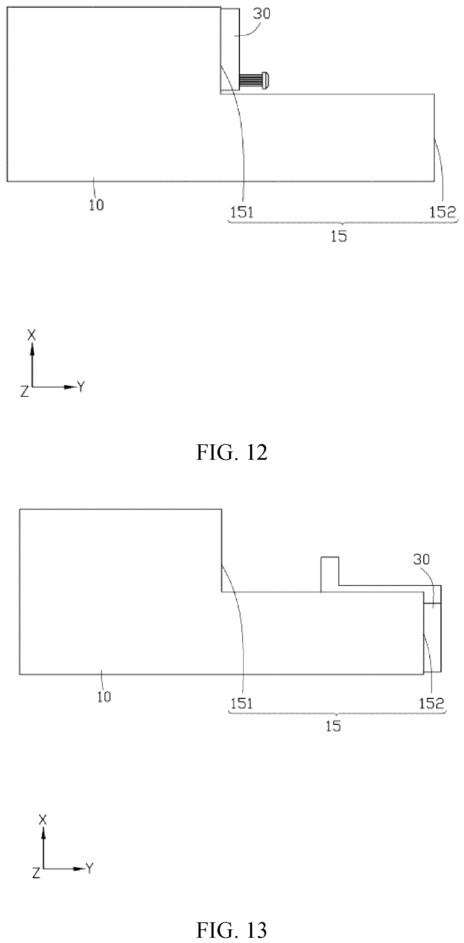

In some embodiments, referring to FIG. 12 and FIG. 13, one first seal edge 15 among the two first seal edges 15 includes a first section 151 and a second section 152. Viewed along the first direction Z, a projection of the first section 151 is spaced apart from a projection of the second section 152. The first tab 21, the second tab 22, and the third tab 23 all protrude from the first section 151. The circuit board 30 is disposed in the first section 151. The first seal edge 15 is divided into the first section 151 and the second section 152. The length of the first section 151 and the length of the second section 152 in the third direction X are both less than the length of the first seal edge 15 in the third direction X. As an example, the housing 10 is roughly L-shaped so that the first seal edge 15 includes the first section 151 and the second section 152. The circuit board 30 is disposed in the first section 151, thereby further downsizing the circuit board 30.

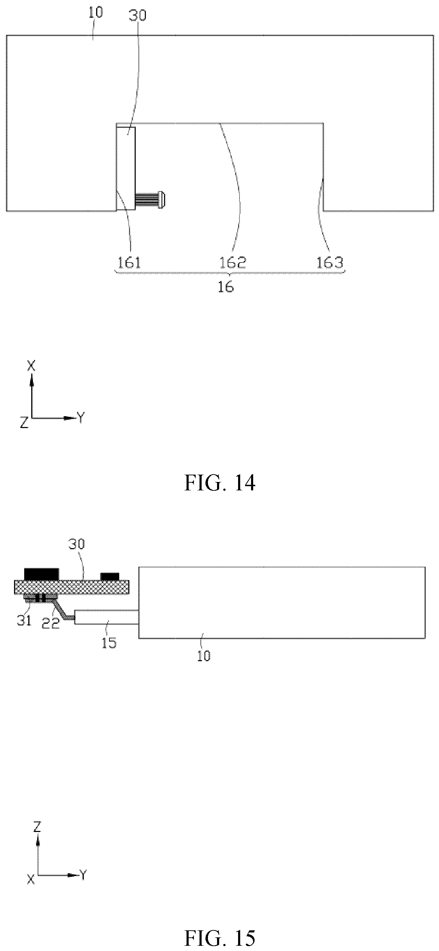

In some embodiments, still referring to FIG. 14, one second seal edge 16 among the two second seal edges 16 includes a third section 161, a fourth section 162, and a fifth section 163 that are connected together. Viewed along the first direction, the third section 161 is perpendicular to the fourth section 162. The third section 161 is parallel to the fifth section 163. The first tab 21, the second tab 22, the third tab 23, and the fourth tab 24 all protrude from the third section 161, or all protrude from the fourth section 162, or all protrude from the fifth section 163. As an example, the housing 10 is roughly hollow U-shaped.

The circuit board 30 is disposed in a section from which the tab protrudes among the third section 161, the fourth section 162, or the fifth section 163. The length of the third section 161 and the length of the fifth section 163 in the second seal edge 16 in the third direction X are both less than the length of the second seal edge 16 in the second direction Y. The length of the fourth section 162 in the second direction Y is less than the length of the second seal edge 16 in the second direction Y. Positioning the circuit board 30 in any one of the third section 161, the fourth section 162, or the fifth section 163 can sufficiently utilize the space of the battery.

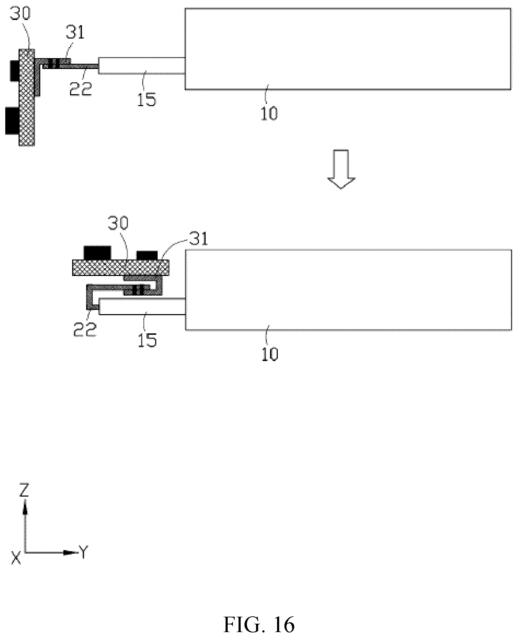

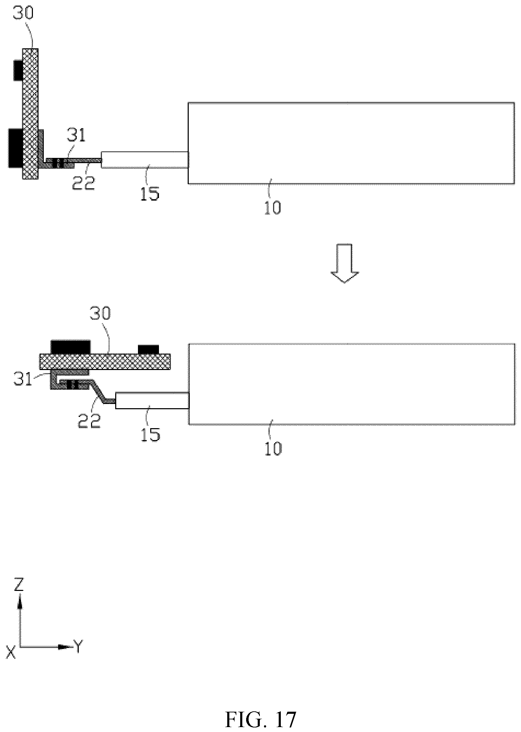

In some embodiments, referring to FIG. 15 to FIG. 17, the first tab 21, the second tab 22, the third tab 23, and the fourth tab 24 protrude from the first seal edge 15, and extend along the second direction Y. The circuit board 30 is mounted on the first seal edge 15, and is connected to the first tab 21, the second tab 22, and the fourth tab 24 by a plurality of conductive pieces 31 separately. Viewed along the first direction Z, the projection of the circuit board 30 at least partially overlaps the projection of the first seal edge 15, thereby shortening the overall length of the electrochemical device 100 in the second direction Y.

Optionally, the conductive piece 31 is an L-shaped sheet. Of the L-shaped conductive piece 31, one section is welded to the circuit board 30, and the other section is welded to the tab. By bending the nickel sheet and the tab in sequence, the circuit board 30 is driven to turn over correspondingly. In this way, when viewed along the first direction, the projection of the circuit board 30 at least partially overlaps the projection of the first seal edge 15.

Optionally, the conductive piece 31 is flat straight sheet-shaped. The circuit board 30 is driven to turn over correspondingly by bending the tab. In this way, when viewed along the first direction Z, the projection of the circuit board 30 at least partially overlaps the projection of the first seal edge 15.

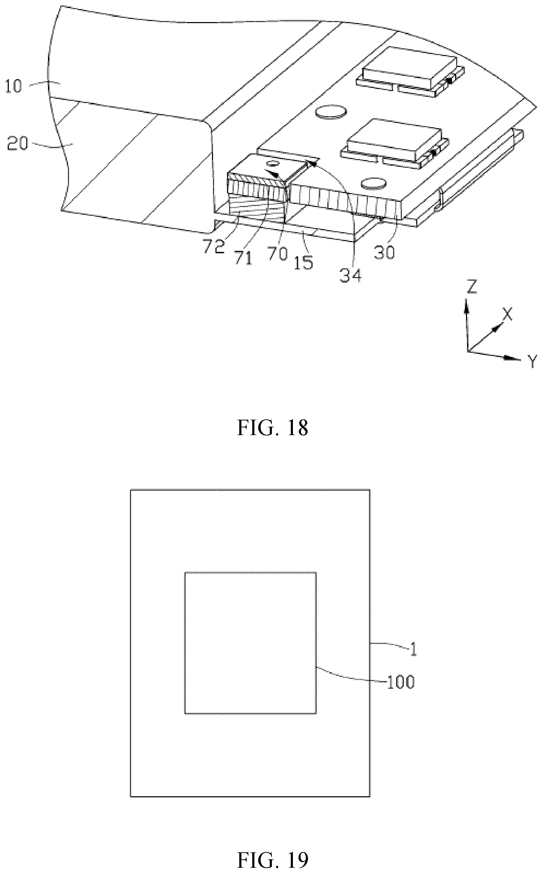

In some embodiments, referring to FIG. 18, the electrochemical device 100 further includes a temperature-controlled switch 70. The temperature-controlled switch 70 is mounted on the circuit board 30, and is connected to a first sub-electrode assembly 201 and a second sub-electrode assembly 202 in series.

In some embodiments, referring to FIG. 18, a clearance opening 34 is created and runs through the circuit board 30 along the first direction Z, and is available for mounting the temperature-controlled switch 70. The temperature-controlled switch 70 is electrically connected to the circuit board 30 through the clearance opening 34 by Surface Mounted Technology (SMT).

As an example, the clearance opening 34 is a notch recessed at one lateral edge of the circuit board 30. As an example, the clearance opening 34 is a through-hole that runs through the circuit board 30 along the first direction Z.

A temperature sensor may be built in the temperature-controlled switch 70, and the temperature-controlled switch may include a temperature sensing wall 71 connected to the temperature sensor. The temperature sensing wall 71 serves as a transfer medium oriented toward the first seal edge 15 to detect the heat emitted by the electrode assembly 20. When the temperature sensor detects that the heat of the electrode assembly 20 exceeds a preset threshold, the temperature-controlled switch 70 controls the current between the circuit board 30 and the electrode assembly 20 to get cut off to reduce the risk of damage to the electrochemical device 100 caused by overcharge.

In some embodiments, referring to FIG. 18, a thermal conductor 72 is further disposed between the temperature sensing wall 71 and the first seal edge 15. The thermal conductor 72 may be in contact with the temperature sensing wall 71, and additionally, the thermal conductor 72 may be in contact with the first seal edge 15. The thermal conductor 72 may be a thermal adhesive or a thermal foam gasket, and serves to transfer heat and fix the position of the thermal conductor 72, thereby improving the accuracy of temperature sensing.

Referring to FIG. 19, an embodiment of this application further provides an electrical device 1. The electrical device 1 includes the electrochemical device 100 disclosed in any one of the above embodiments. The electrical device 1 contains the electrochemical device 100 based on the technical solution in any one of the above embodiments, and therefore, achieves at least the beneficial effects brought by the electrochemical device 100 based on the technical solution in any one of the embodiments, the details of which are omitted here.

The electrical device 1 may be a mobile phone, a computer, a camera, a calculator, a headset, an e-book, a player, a phone watch, a light, a toy, a game console, a video recorder, a portable CD player, an electronic notepad, a portable sound recorder, a radio set, or the like.

In addition, a person of ordinary skill in the art understands that the foregoing embodiments are merely intended to illustrate this application, but not intended to limit this application. Any and all appropriate modifications and changes made to the embodiments without departing from the spirit and conception of this application still fall within the protection scope of this application.

## Claims

1. An electrochemical device, **characterized in that** the electrochemical device comprises:
a housing;
an electrode assembly, comprising a first sub-electrode assembly and a second sub-electrode assembly, wherein the first sub-electrode assembly and the second sub-electrode assembly are mounted in the housing along a first direction, a first tab and a second tab of opposite polarities are disposed on the first sub-electrode assembly, a third tab and a fourth tab of opposite polarities are disposed on the second sub-electrode assembly, and the first tab and the fourth tab are of opposite polarities;
a circuit board, on which a plurality of conductive pieces are disposed, the first tab and the fourth tab each are connected to one separate conductive piece, the second tab is connected to the third tab, and the second tab is further connected to one of the conductive pieces; and
viewed along the first direction, a projection of the second tab at least partially overlaps a projection of the third tab.

2. The electrochemical device according to claim 1, **characterized in that** the electrode assembly comprises a third sub-electrode assembly; the third sub-electrode assembly is disposed on one side of the second sub-electrode assembly, the one side of the second sub-electrode assembly being oriented away from the first sub-electrode assembly; a fifth tab and a sixth tab of opposite polarities are disposed on the third sub-electrode assembly; the fifth tab is connected to the fourth tab; the sixth tab and the third tab are of opposite polarities; and the sixth tab is connected to one of the conductive pieces; and
viewed along the first direction, a projection of the fifth tab at least partially overlaps a projection of the fourth tab.

3. The electrochemical device according to claim 1, **characterized in that** the plurality of conductive pieces and the second tab are made of a first material, the third tab is made of a second material, a melting point of the first material is higher than a melting point of the second material,;and
along the first direction, one of the conductive pieces, the second tab, and the third tab are stacked in sequence.

4. The electrochemical device according to claim 1, **characterized in that** a first connecting region is provided between the second tab and one of the conductive pieces, a second connecting region is provided between the second tab and the third tab; and,
viewed along the first direction, a projection of the first connecting region does not overlap a projection of the second connecting region.

5. The electrochemical device according to claim 1, **characterized in that**, viewed along the first direction, a projection of the first tab, a projection of the fourth tab, and the projection of the second tab do not overlap.

6. The electrochemical device according to claim 5, **characterized in that**, viewed along the first direction, the projection of the second tab is located between the projection of the first tab and the projection of the fourth tab.

7. The electrochemical device according to claim 1, **characterized in that** the second tab comprises a first portion and a second portion, the first portion is connected to the first sub-electrode assembly, the second portion is configured to be connected to one of the conductive pieces,;and
viewed along the first direction, a width of the second portion is less than a width of the first portion.

8. The electrochemical device according to claim 1, **characterized in that** a plurality of accommodation cavities isolated from each other are disposed in the housing, the plurality of accommodation cavities are arranged along the first direction, and the first sub-electrode assembly and the second sub-electrode assembly are mounted in different accommodation cavities.

9. The electrochemical device according to claim 8, **characterized in that** the housing comprises a body portion, two first seal edges, and two second seal edges; a second direction, a third direction, and the first direction are perpendicular to each other; along the second direction, the two first seal edges are located on two opposite sides of the body portion respectively; and, along the third direction, the two second seal edges are located on other two opposite sides of the body portion respectively.

10. The electrochemical device according to claim 9, **characterized in that** a length of each of the first seal edges along the third direction is W, a length of each of the second seal edges along the second direction is L, W is less than L, and the circuit board is disposed on the first seal edge.

11. The electrochemical device according to claim 10, **characterized in that** one of the first seal edges comprises a first section and a second section; viewed along the first direction, a projection of the first section is spaced apart from a projection of the second section; and the circuit board is disposed in the first section.

12. The electrochemical device according to claim 10, **characterized in that** the two second seal edges extend along the first direction, the electrochemical device comprises a first adhesive, the first adhesive is disposed on each second seal edge, and the first adhesive overlays an end face of the second seal edge in an extension direction.

13. The electrochemical device according to claim 10, **characterized in that** the electrochemical device comprises a second adhesive, and the second seal edges are bonded to the body portion by the second adhesive.

14. The electrochemical device according to claim 9, **characterized in that** one of the second seal edges comprises a third section, a fourth section, and a fifth section that are connected together; viewed along the first direction, the third section is perpendicular to the fourth section, and the third section is parallel to the fifth section; and the circuit board is disposed in any one of the third section, the fourth section, or the fifth section.

15. The electrochemical device according to claim 9, **characterized in that** the circuit board is mounted on the first seal edges; and, viewed along the first direction, a projection of the circuit board at least partially overlaps a projection of the first seal edges.

16. The electrochemical device according to claim 15, **characterized in that** the electrochemical device comprises a temperature-controlled switch, the temperature-controlled switch is mounted on the circuit board, the temperature-controlled switch is connected to the electrode assembly in series, the temperature-controlled switch comprises a temperature sensing wall, and the temperature sensing wall is oriented toward one of the first seal edges.

17. The electrochemical device according to claim 16, **characterized in that** a thermal conductor is disposed between the temperature sensing wall and one of the first seal edges.

18. An electrical device, **characterized in that** the electrical device comprises the electrochemical device according to any one of claims 1 to 17.
